# NEW EUROPEAN PATENT SPECIFICATION

(11) **EP 2 676 997 B2**
(45) Date of publication and mention of the opposition decision: **17.03.2021**
(45) Mention of the grant of the patent: 23.05.2018
(21) Application number: 11858881.3
(22) Date of filing: 28.12.2011
(51) Int. Cl.: C08L 27/06, E06B 1/26, C08K 13/02, C08L 71/02, C08K 5/098, C08K 5/00, C08K 3/26

(54) **VINYL CHLORIDE RESIN COMPOSITION**
VINYLCHLORIDHARZZUSAMMENSETZUNG
COMPOSITION DE RÉSINE CHLORURE DE VINYLE

(30) Priority: 16.02.2011 JP 2011031084
(43) Date of publication of application: 25.12.2013
(73) Proprietor: Adeka Corporation, Tokyo 116-8554 (JP)
(72) Inventor: SENGOKU, Tadashi, Saitama-shi, Saitama 336-0022 (JP); KAJIWARA, Kenji, Saitama-shi, Saitama 336-0022 (JP); HARADA, Yohei, Saitama-shi, Saitama 336-0022 (JP); MIZU, Masumi, Saitama-shi, Saitama 336-0022 (JP)
(74) Representative: Forstmeyer, Dietmar
(86) International application number: PCT/JP2011/080422
(87) International publication number: WO 2012/111240

(56) References cited:
- EP-A1- 2 223 970
- EP-A1- 2 336 237
- WO-A1-2007/132591
- WO-A1-2009/021652
- JP-A- 2008 214 480
- JP-A- 2009 132 757
- JP-A- 2009 132 758

## Description

### TECHNICAL FIELD

The present invention relates to a white building material made of a vinyl chloride resin composition that is excellent in thermal stability, coloring resistance and processability, without using heavy metal stabilizers such as lead and tin that are problematic from the viewpoints of safeness and environmental conservation, and thus is suitable for use in building materials.

### BACKGROUND ART

Vinyl chloride resins can be used in various uses since their hardness can be easily adjusted by adding a plasticizer. Specifically, hard-type vinyl chloride resin compositions that are completely free from plasticizers, or contain little plasticizer (0 to 10 parts by mass with respect to 100 parts by mass of a vinyl chloride resin), or semi-hard type vinyl chloride resin compositions containing a small amount of a plasticizer (10 to 50 parts by mass with respect to 100 parts by mass of a vinyl chloride resin) are excellent in stiffness, and thus are widely used in building materials and the like. Therefore, in the cases of these hard or semi-hard vinyl chloride resin compositions, higher performances are required for processing in which they are exposed to a high temperature and a high pressure, as well as for the thermal stability and coloring resistance of molded articles.

Specifically, since a liquid component such as a plasticizer is not added at all, or added little to hard vinyl chloride resin compositions, the hard vinyl chloride resin compositions have a high melting viscosity, require processing at a high temperature, and thus require high thermal stability. Furthermore, in uses in building materials such as window frames, coloring resistance is emphasized since the color tone of a product is emphasized.

As stabilizers for these hard vinyl chloride resin compositions, heavy metal stabilizers such as lead, cadmium and tin have been conventionally used from the viewpoints of advantage in cost, since they are inexpensive. However, as the toxicity and adverse effects on environments of heavy metals have been becoming problematic in recent years due to the increasing interest in environmental conservation and safeguard, there has been a tendency to use barium-zinc composite stabilizers. More recently, stabilizers such as calcium-zinc stabilizers are suggested since the effect of barium on environments has started to be of concern (see Patent Literatures 1 and 2).

However, when the heat decomposition of a vinyl chloride resin composition containing a composite stabilizer containing zinc is initiated, zinc chloride is generated, and this zinc chloride acts as a catalyst to thereby promote the deterioration of the vinyl chloride resin. As a means for preventing this, a method of inactivating zinc chloride by chelating the zinc chloride by using polyols in combination is known. Such polyols may include pentaerythritol, and condensates of pentaerythritol such as dipentaerythritol and tripentaerythritol. However, since pentaerythritol has a sublimation property, and thus phenomena such as pollution of processing devices and generation of skin roughness on vinyl chloride resin composition products are concerned, it is necessary to decrease addition of pentaerythritol as possible.

Furthermore, among the condensates of pentaerythritol, dipentaerythritol and tripentaerythritol are compounds that impart a thermal stabilizing effect to vinyl chloride resin compositions, but these compounds have higher melting points than the mold-processing temperatures of vinyl chloride resin compositions, and have poor compatibility with vinyl chloride resins, and thus there were problems that dispersion failure occurs in the resins, and these compounds cause plate-out to thereby pollute processing machines, and consequently the heat stabilization effect becomes insufficient, and the appearance of molded articles is decreased.

In order to improve the problems due to dispersion failure, polyol mixtures each containing pentaerythritol condensates with prescribed condensation degrees are suggested (see Patent Literatures 3 and 4). However, these documents do not contain any description about a coloring-suppressing effect, or any description that a molded article that is excellent in use in hard building materials, and thus it was impossible to obtain such findings.

The use of zinc-modified hydrotalcite has been related to improvements in the resistance to yellowing of PVC compositions used for white window frames (see Patent Literatures 5 and 6).

### CITATION LIST

### PATENT LITERATURE

Patent Literature 1: JP 2003-160707 A
Patent Literature 2: JP2008-214480 A
Patent Literature 3: JP 2009-132757 A
Patent Literature 4: JP2009-132758A
Patent Literature 5: WO 2009/021652 A1
Patent Literature 6: WO 2010/041378 A1

### SUMMARY OF INVENTION

### TECHNICAL PROBLEM

Therefore, the present invention aims at providing a vinyl chloride resin composition that is excellent in thermal stability, coloring resistance and processability, free from heavy metal stabilizers such as lead, tin and barium, and thus is suitable for use in white building materials.

### SOLUTION TO PROBLEM

The present inventors did intensive studies aiming at resolving the above-mentioned problems, and consequently completed the present invention.

More specifically, the present invention provides a white building material comprising a vinyl chloride resin and:
(a) 0.5 to 3 parts by mass of an organic acid calcium salt and/or an organic acid zinc salt,
(b) 0.1 to 1 parts by mass of calcium acetylacetonate and/or zinc acetylacetonate,
(c) 0.1 to 3 parts by mass of a zinc-modified hydrotalcite compound represented by the following formula (1):
   [Chemical Formula 1]

   Mgₓ₁Znₓ₂Al₂(OH)₂₍ₓ₁₊ₓ₂₎₊₄·CO₃·mH₂O (1)

   wherein x1 and x2 each represents a number that satisfies the conditions represented by the following formulas, and m represents a real number, 0<x2/x1<10, 2≤x1+x2<20,
(d) 0.1 to 3 parts by mass of a polyol mixture, and
(e) 0.5 to 6 parts by mass of titanium dioxide, with respect to 100 parts by mass of the vinyl chloride resin,
wherein the polyol mixture of the above-mentioned component (d) is a polyol mixture composed of pentaerythritols and condensates thereof, and when the condensation degree of each pentaerythritol is represented by n, the total content of the pentaerythritols wherein n=1 to 3 is 5 to 40 mass% with respect to the total amount of the polyol mixture, provided that the total content of the pentaerythritols wherein n=1 to 3 and the condensates of the pentaerythritols wherein n≥4 is 100 mass%.

The present invention further provides the white building material wherein the polyol mixture (d) is a polyol mixture composed of pentaerythritols and condensates thereof, and when the condensation degree of each pentaerythritol is represented by n, the content of the pentaerythritol wherein n=1 is 0 to 10 mass%, and the total content of the pentaerythritols wherein n=1 to 3 is 5 to 30 mass%, with respect to the total amount of the polyol mixture.

### ADVANTAGEOUS EFFECT OF THE INVENTION

The present invention can provide a white building material that is excellent in thermal stability, processability and coloring resistance, specifically excellent in coloring suppression effect, free from heavy metal stabilizers such as lead, tin and barium.

### DESCRIPTION OF PREFERRED EMBODIMENTS

Hereinafter the vinyl chloride resin composition that finds use in the present invention will be mentioned in detail based on preferable exemplary embodiments.

The vinyl chloride resin used in the present invention is not specifically limited by the polymerization method thereof, such as mass polymerization, solution polymerization, suspension polymerization and emulsification polymerization, and examples may include vinyl chloride resins such as polyvinyl chloride, chlorinated polyvinyl chloride, polyvinylidene chloride, chlorinated polyethylene, vinyl chloride-vinyl acetate copolymers, vinyl chloride-ethylene copolymers, vinyl chloride-propylene copolymers, vinyl chloride-styrene copolymers, vinyl chloride-isobutylene copolymers, vinyl chloride-vinylidene chloride copolymers, vinyl chloride-styrene-maleic anhydride tercopolymers, vinyl chloride-styrene-acrylonitrile copolymers, vinyl chloride-butadiene copolymers, vinyl chloride-isoprene copolymers, vinyl chloride-chlorinated propylene copolymers, vinyl chloride-vinylidene chloride-vinyl acetate tercopolymers, vinyl chloride-maleic acid ester copolymers, vinyl chloride-methacrylic acid ester copolymers, vinyl chloride-acrylonitrile copolymers and copolymers of vinyl chloride-various vinyl ethers, and mutual blend products thereof or blend products, block copolymers and graft copolymers with other synthetic resins that are free from chlorine such as acrylonitrile-styrene copolymers, acrylonitrile-butadiene-styrene copolymers, ethylene-vinyl acetate copolymers, ethylene-ethyl (meth)acrylate copolymers and polyesters.

Next, the component (a) of the present invention will be explained. In the present invention, an organic acid calcium salt and/or an organic acid zinc salt is/are used as the component (a). Examples of such organic acid calcium salt may include calcium salts of organic carboxylic acids, phenols or organic phosphoric acids. Furthermore, examples of the above-mentioned organic acid zinc salt may include zinc salts obtained by changing the calcium salts exemplified as the above-mentioned organic acid calcium salts to zinc.

Examples of the above-mentioned organic carboxylic acids may include monovalent carboxylic acids such as acetic acid, propionic acid, butyric acid, valeric acid, caproic acid, enanthic acid, caprylic acid, pelargonic acid, 2-ethylhexyl acid, neodecanoic acid, capric acid, undecanoic acid, lauric acid, tridecanoic acid, myristic acid, palmytic acid, isostearic acid, stearic acid, 12-hydroxystearic acid, behenic acid, montanoic acid, benzoic acid, monochlorobenzoic acid, p-tert-butylbenzoic acid, dimethylhydroxybenzoic acid, 3,5-di-tert-butyl-4-hydroxybenzoic acid, toluic acid, dimethyl benzoate, ethyl benzoate, cuminic acid, n-propylbenzoic acid, aminobenzoic acid, N,N-dimethylaminobenzoic acid, acetoxybenzoic acid, salicylic acid, p-tert-octylsalicylic acid, elaidic acid, oleic acid, linoleic acid, linolenic acid, thioglycolic acid, mercaptopropionic acid and octylmercaptopropionic acid; bivalent carboxylic acids such as oxalic acid, malonic acid, succinic acid, glutalic acid, adipic acid, pimelic acid, suberic acid, azelaic acid, sebacic acid, phthalic acid, isophthalic acid, telephthalic acid, hydroxyphthalic acid, chlorophthalic acid, aminophthalic acid, maleic acid, fumaric acid, citraconic acid, metaconic acid, itaconic acid, aconitic acid and thiodipropionic acid, or monoester or monoamide compounds thereof; and di- or tri-ester compounds of trivalent or tetravalent carboxylic acids such as butanetricarboxylic acid, butanetetracarboxylic acid, hemimellitic acid, trimellitic acid, mellophanic acid and pyromellitic acid.

Furthermore, examples of the above-mentioned phenols may include tert-butylphenol, nonylphenol, dinonylphenol, cyclohexylphenol, phenylphenol, octylphenol, phenol, cresol, xylenol, n-butylphenol, isoamylphenol, ethylphenol, isopropylphenol, isooctylphenol, 2-ethylhexylphenol, tert-nonylphenol, decylphenol, tert-octylphenol, isohexylphenol, octadecylphenol, diisobutylphenol, methylpropylphenol, diamylphenol, methylisohexylphenol and methyl-tert-octylphenol.

Furthermore, examples of the above-mentioned organic phosphoric acids may include mono- or di-octylphosphoric acid, mono- or di-dodecylphosphoric acid, mono- or di-octadecylphosphoric acid, mono- or di-(nonylphenyl)phosphoric acid, nonyl phenyl phosphonate ester and stearyl phosphonate ester.

As the above-mentioned the component (a) which is the organic acid calcium salt and/or organic zinc salt, an acidic salt, a neutral salt, a basic salt, or hyper basic complexes obtained by neutralizing a part or whole part of the base of the basic salt with carbonic acid, may also be used.

Furthermore, the above-mentioned organic acid calcium salts and organic acid zinc salts each may be used alone, or may be used in combination. In addition, the organic acid calcium salts and organic acid zinc salts may be respectively used by one kind or as a combination of two or more kinds.

As the organic acid calcium salt and/or an organic acid zinc salt, which is the above-mentioned the component (a), an organic carboxylic acid salt is preferable from the viewpoints of heat-resistance and coloring suppression effect.

In the vinyl chloride resin composition the content of the organic acid calcium salt and/or an organic acid zinc salt, which is the above-mentioned the component (a), is 0.5 to 3 parts by mass of the vinyl chloride resin, from the viewpoints of heat-resistance and coloring suppression effect.

As the above-mentioned the component (a), it is preferable to use one or more kind(s) of organic acid calcium salt(s) and one or more kind(s) of organic acid zinc salt(s) in combination, and the content of the organic acid calcium salt(s) in such case is preferably 0.01 to 5 parts by mass, more preferably 0.05 to 3 parts by mass with respect to 100 parts by mass of the vinyl chloride resin, and the content of the organic acid zinc salt(s) is preferably 0.01 to 5 parts by mass, more preferably 0.05 to 3 parts by mass.

Next, the component (b) of the present invention will be explained.

In the present invention, as the component (b), calcium acetylacetonate and/or zinc acetylacetonate is/are used. Such calcium acetylacetonate and zinc acetylacetonate each may be used alone, or may be used in combination.

In the vinyl chloride resin composition of the present invention, the content of the calcium acetylacetonate and zinc acetylacetonate, which are the above-mentioned component (b), is 0.1 to 1 parts by mass with respect to 100 parts by mass of the vinyl chloride resin, in view of coloring suppression effect.

Next, the component (c) of the present invention will be explained.

In the present invention, a zinc-modified hydrotalcite compound is used as the component (c). In the present invention, the hydrotalcite compound refers to a carbonic acid double salt compound of magnesium, zinc and aluminum. The above-mentioned hydrotalcite compound may be a natural product or a synthetic product. As the method for synthesizing the above-mentioned synthetic product, known methods described in JP46-2280B, JP50-30039B, JP51-2912 9B and JP61-174270B can be exemplified. Furthermore, in the present invention, the above-mentioned hydrotalcite compound can be used without being limited by the crystal structure, crystal particle system or the presence or absence of crystal water and the amount thereof.

Furthermore, the above-mentioned hydrotalcite can be treated with perchloric acid, and hydrotalcite whose surface is coated with a higher aliphatic acid such as stearic acid, a metal salt of a higher aliphatic acid such as an alkali metal salt of oleic acid, a metal salt of an organic sulfonic acid such as an alkali metal salt of dodecylbenzenesulfonic acid, a higher aliphatic acid amide, a higher aliphatic acid ester or a wax can also be used.

A zinc-modified hydrotalcite that contains zinc is more preferable from the viewpoint of thermal stability and coloring suppression effect.

In the vinyl chloride resin composition of the present invention, the content of the hydrotalcite compound, which is the above-mentioned component (c), is 0.1 to 3 parts by mass with respect to 100 parts by mass of the vinyl chloride resin from the viewpoints of thermal stability and coloring suppression effect.

Next, the component (d) of the present invention will be explained.
In the present invention, a polyol mixture is used as the component (d). Such polyol mixture is a polyol mixture composed of pentaerythritols and condensates thereof, and is characterized by that, when the condensation degree of each pentaerythritol is represented by n, the total content of the pentaerythritols wherein n=1 to 3 is 5 to 40 mass% with respect to the total amount of the polyol mixture, provided that the total content of the pentaerythritols wherein n=1 to 3 and the condensates of the pentaerythritols wherein n≥4 is 100 mass%.

As the above-mentioned polyol mixture, a polyol mixture wherein, when the condensation degree of each pentaerythritol is represented by n, the total content of the pentaerythritols wherein n=1 to 3 is 10 to 30 mass% with respect to the total amount of the polyol mixture is preferable; a polyol mixture wherein the content of the pentaerythritol wherein n=1 is 0 to 10 mass%, and the total content of the pentaerythritols wherein n=1 to 3 is 5 to 30 mass%, with respect to the total amount of the polyol mixture, is more preferable; and a polyol mixture wherein the content of the pentaerythritol wherein n=1 is 0 to 5 mass%, and the total content of the pentaerythritols wherein n=1 to 3 is 10 to 30 mass%, with respect to the total amount of the polyol mixture, is even more preferable, from the viewpoints of heat-resistance and plate-out resistance. When the total content of the pentaerythritols wherein n=1 to 3 is less than 5 mass%, it is not preferable since the heat-resistance of the vinyl chloride resin composition becomes poor, whereas when the content is more than 40 mass%, it is not preferable since plate-out may occur.

The above-mentioned pentaerythritols and condensates thereof may include a compound represented by the following general formula (2). 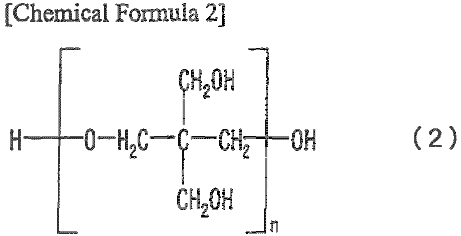 wherein n is an integer of 1 or more.

The above-mentioned polyol mixture may also contain a product in which the condensates of the pentaerythritol represented by the above-mentioned general formula (2) are ether-bonded in a molecule, a product in which the intermediate methylol groups are ether-bonded with the other molecules or further linked in the form of a mesh, or a product in which the molecules are further linked to be large and form macrocyclic ether structures at respective sites.

The above-mentioned polyol mixture is not specifically limited, and can be produced by a known method. For example, the polyol mixture can be produced by subjecting the pentaerythritols and/or the condensates of the pentaerythritols to a dehydration condensation reaction under heating, directly or in the presence of a suitable catalyst and a suitable solvent.

Examples of the catalyst used for the production of the above-mentioned polyol mixture may include inorganic acids and organic acids that are generally used for a dehydration condensation reaction of an alcohol. Examples of the inorganic acid may include mineral acids such as phosphoric acid and sulfuric acid; acidic salts of these mineral acids; clay minerals (for example, montmorillonite), solid acid catalysts such as silica-alumina and zeolite. Examples of the organic acid may include formic acid and p-toluenesulfonic acid. Although the use amount of the above-mentioned catalyst is not specifically limited, in the case when a water-soluble acid catalyst is used, it may be an amount at which the pH in the reaction system during the reaction can be maintained at lower than 7, preferably 5 or less. Alternatively, in the case when a solid acid catalyst is used, the use amount may be generally a use amount of 0.1 to 100 mass% with respect to the pentaerythritols.

Examples of the solvent used for the production of the above-mentioned polyol mixture may include hydrocarbons such as benzene, xylene, decaline and tetraline, ethers such as dioxane, tetrahydrofuran, ethyl ether, anisole, phenyl ether, diglyme, tetraglyme and 18-crown-6, ketones such as methyl acetate, ethyl butyrate, methyl benzoate and γ-butyrolactone, N-substituted amides such as N-methylpyrrolidin-one, N,N-dimethylacetoamide, N-methylpiperidone and hexamethylphosphoric triamide, tert-amines such as N,N-diethylaniline, N-methylmorpholine, pyridine and quinoline, sulfones such as sulforane, sulfoxides such as dimethylsulfoxide, urea derivatives such as 1,3-dimethyl-2-imidazolidinone, phosphine oxides such as tributylphosphine oxide, and silicone oil, and the solvent may be a solvent that has undergone a dehydration treatment or a hydrous product.

The reaction temperature of the dehydration condensation under heating in the production of the above-mentioned polyol mixture is generally about 100 to 280°C, more preferably 150 to 240°C. When the reaction temperature is less than 100°C, the reaction may become slow, whereas when the reaction temperature is higher than 280°C, the control of the condensation reaction may become difficult.

Furthermore, in the vinyl chloride resin composition of the present invention, the content of the polyol mixture, which is the component (d), is 0.1 to 3 parts by mass with respect to 100 parts by mass of the vinyl chloride resin from the viewpoint of thermal stability.

The content of the titanium dioxide of the above-mentioned component (e) is 0.5 to 6 parts by mass with respect to 100 parts by mass of the vinyl chloride resin.

Furthermore, it is also preferable to further incorporate a lubricant in the vinyl chloride resin composition of the present invention from the viewpoint of processability.

The lubricant used in the present invention can be suitably selected from known lubricants. Examples of known lubricants may include hydrocarbon lubricants such as low molecule wax, paraffin wax, polyethylene wax, chlorinated hydrocarbons and fluorocarbons; natural wax lubricants such as carnauba wax and candelilla wax; higher aliphatic acids such as lauric acid, stearic acid and behenic acid, or aliphatic acid lubricants such as oxyaliphatic acids such as hydroxystearic acid; aliphatic amide lubricants such as aliphatic amide compounds such as stearylamide, laurylamide and oleyl amide or alkylenebisaliphatic amides such as methylenebisstearylamide and ethylenebisstearylamide; aliphatic acid alcohol ester lubricants such as aliphatic acid monohydric alcohol ester compounds such as stearyl stearate and butyl stearate, or aliphatic acid polyvalent alcohol ester compounds such as glycerin tristearate, sorbitan tristearate, pentaerythritol tetrastearate, dipentaerythritol hexastearate, polyglycerin polyricinoleate and hardened castor oil, or composite ester compounds of monovalent aliphatic acids and multibasic organic acids and polyvalent alcohols such as adipic acid-stearic acid ester of dipentaerythritol; aliphatic alcohol lubricants such as stearyl alcohol, lauryl alcohol and palmityl alcohol; metal soaps; montanoic acid lubricants such as partially-saponified montanoic acid esters; acrylic lubricants and silicone oils. These lubricants may be used by one kind alone, or as a combination of two or more kinds.

In the case when the lubricant is used in the vinyl chloride resin composition of the present invention, the content is preferably 0.001 to 10 parts by mass, specifically preferably 0.05 to 5 parts by mass with respect to 100 parts by mass of the vinyl chloride resin from the viewpoint of processability.

In the production of the vinyl chloride resin composition the timing for incorporating the components (a) to (e), lubricant and other additive components, which are added as necessary, in the vinyl chloride resin is not specifically limited. For example, two or more kinds selected from the components (a) to (e) in advance, and as necessary, from the lubricant and other additive components, may be put into one package to give a mixture, and the mixture may be incorporated into the vinyl chloride resin, or the respective components may be sequentially incorporated in the vinyl chloride resin. Furthermore, in the case when the respective components are put into one package, the components may be respectively pulverized and then mixed, or may be mixed and then pulverized.

Other additives that are generally used in vinyl chloride resin compositions such as plasticizers, zeolite compounds, β-diketone compounds, perchlorates, epoxy compounds, polyvalent alcohols, antioxidants such as phosphorus antioxidants, phenolic antioxidants and sulfur antioxidants, ultraviolet absorbers, light stabilizers such as hindered amine light stabilizers, fillers, foaming agents, flame retarders and flame retarder aids can be added to the vinyl chloride resin composition to the extent that the effect of the present invention is not lost (preferably 100 parts by mass or less with respect to 100 parts by mass of the vinyl chloride resin).

Examples of the above-mentioned plasticizers may include phthalate plasticizers such as dibutyl phthalate, butyl hexyl phthalate, diheptyl phthalate, dioctyl phthalate, diisononyl phthalate, diisodecyl phthalate, dilauryl phthalate, dicyclohexyl phthalate and dioctyl telephthalate; adipate plasticizers such as dioctyl adipate, diisononyl adipate, diisodecyl adipate and di(butyldiglycol) adipate; phosphate plasticizer systems such as triphenyl phosphate, tricresyl phosphate, trixylenyl phosphate, tri(isopropylphenyl) phosphate, triethyl phosphate, tributyl phosphate, trioctyl phosphate, tri(butoxyethyl) phosphate and octyl diphenyl phosphate; polyester plasticizers using ethylene glycol, diethylene glycol, triethylene glycol, 1,2-propylene glycol, 1,3-propylene glycol, 1,3-butanediol, 1,4-butanediol, 1,5-hexanediol, 1,6-hexanediol, neopentyl glycol or the like as a polyvalent alcohol and oxalic acid, malonic acid, succinic acid, glutalic acid, adipic acid, pimelic acid, suberic acid, azelaic acid, sebacic acid, phthalic acid, isophthalic acid or terephthalic as a dibasic acid, and using a monovalent alcohol or a monocarboxylic acid as a stopper as necessary; as well as tetrahydrophthalic acid plasticizers, azelaic acid plasticizers, sebacic acid plasticizers, stearic acid plasticizers, citric acid plasticizers, trimellitic acid plasticizers, pyromellitic acid plasticizers, biphenyltetracarboxylic acid ester plasticizers, and chlorine plasticizers.

In the vinyl chloride resin composition although the content of the above-mentioned plasticizer can be optionally changed, the content is specifically preferably 10 parts by mass or less with respect to 100 parts by mass of the vinyl chloride resin, and by forming a hard-type vinyl chloride resin by such way, the effect of the present invention can be exerted more. Furthermore, the above-mentioned plasticizer can also be preferably used in a semi-hard use containing 50 parts by mass or less of the plasticizer with respect to 100 parts by weight of the vinyl chloride resin.

The above-mentioned zeolite compounds are aluminosilicate salts of alkali or alkaline earth metals having unique three-dimensional zeolite crystal structures, and typical examples thereof may include A-type, X-type, Y-type and P-type zeolites, mordenite, analcite, aluminosilicate salts in the sodalite group, clinobutyrolite, erionite and chabazite, and the zeolite compounds may be either hydrous products having crystal water of these zeolite compounds (so-called zeolite water) or anhydrides obtained by removing crystal water, and those having a particle size of 0.1 to 50 µm can be used, and those having a particle size of 0.5 to 10 µm are specifically preferable.

Examples of the above-mentioned β-diketone compounds may include dehydroacetic acid, dibenzoylmethane, palmitoylbenzoylmethane, and stearoylbenzoylmethane, and metal salts of these are also useful.

Examples of the above-mentioned perchlorates may include metal perchlorates, ammonium perchlorates and perchloric acid-treated silicate. As the metals that constitute these metal salts, lithium, sodium, potassium, calcium, magnesium, strontium, barium, zinc, cadmium, lead and aluminum can be exemplified. The above-mentioned metal perchlorates may be either anhydrides or hydrous salts, or may be solutions in alcohol and ester solvents such as butyl diglycol and butyl diglycol adipate, or dehydrated products thereof.

Examples of the above-mentioned epoxy compounds may include bisphenol-type and novolak-type epoxy resins, epoxylated soybean oil, epoxylated linseed oil, epoxylated tung oil, epoxylated fish oil, epoxylated beef tallow, epoxylated castor oil, epoxylated safflower oil, epoxylated tall oil aliphatic acid octyl, epoxylated linseed oil aliphatic acid butyl, methyl epoxystearate, butyl epoxystearate, 2-ethylhexyl epoxystearate or stearyl epoxystearate, tris(epoxypropyl) isocyanurate, 3-(2-xenoxy)-1,2-epoxypropane, epoxylated polybutadiene, bisphenol-A diglycidyl ether, vinylcyclohexene diepoxide, dicyclopentadiene diepoxide, 3,4-epoxycyclohexyl-6-methylepoxycyclohexanecarboxylate, bis(3,4-epoxycyclohexyl) adipate.

Examples of the above-mentioned polyvalent alcohols may include sorbitol, mannitol, trimethylolpropane, ditrimethylolpropane, stearic acid partial esters of pentaerythritol or dipentaerythritol, bis(dipentaerythritol) adipate, glycerin, diglycerin and tris(2-hydroxyethyl) isocyanurate.

Examples of the above-mentioned phosphorus antioxidants may include triphenyl phosphite, tris(2,4-di-tert-butylphenyl) phosphite, tris(nonylphenyl) phosphite, tris(dinonylphenyl) phosphite, tris(mono, di-mixed nonylphenyl) phosphite, bis(2-tert-butyl-4,6-dimethylphenyl) ethyl phosphite, diphenylacid phosphite, 2,2'-methylenebis(4,6-di-tert-butylphenyl) octyl phosphite, diphenyl decyl phosphite, phenyl diisodecyl phosphite, tributyl phosphite, tris(2-ethylhexyl) phosphite, tridecyl phosphite, trilauryl phosphite, dibutyric acid phosphite, dilauric acid phosphite, trilauryl trithiophosphite, bis(neopentyl glycol)-1,4-cyclohexanedimethyl diphosphite, bis(2,4-di-tert-butylphenyl)pentaerythritol diphosphite, bis(2,6-di-tert-butyl-4-methylphenyl) pentaerythritol diphosphite, distearyl pentaerythritol diphosphite, tetra(C12-15 mixed alkyl)-4,4'-isopropylidene diphenyl phosphite, bis[2,2'-methylenebis(4,6-diamylphenyl)]-isopropylidene diphenyl phosphite, hydrogenated-4,4'-isopropylidene diphenol polyphosphite, tetratridecyl [4,4'-butylidenebis(2-tert-butyl-5-methylphenol)] diphosphite, hexakis(tridecyl)-1,1,3-tris(2'-methyl-5'-tert-butyl-4'-hydroxyphenyl) butanetriphosphite, 9,10-dihydro-9-oxa-10-phosphaphenanthrene-10 oxide and 2-butyl-2-ethylpropanediol-2,4,6-tri-tert-butylphenol monophosphite.

Examples of the above-mentioned phenolic antioxidants may include 2,6-di-tert-butyl-p-cresol, 2,6-diphenyl-4-octadecyloxyphenol, stearyl (3,5-di-tert-butyl-4-hydroxyphenyl)-propionate, distearyl (3,5-di-tert-butyl-4-hydroxybenzyl) phosphonate, thiodiethylene glycol bis[(3,5-di-tert-butyl-4-hydroxyphenyl)propionate], 1,6-hexamethylene bis[(3,5-di-tert-butyl-4-hydroxyphenyl) propionate], 1,6-hexamethylene bis[(3,5-di-tert-butyl-4-hydroxyphenyl) propionic acid amide], 4,4'-thiobis(6-tert-butyl-m-cresol), 2,2'-methylenebis(4-methyl-6-tert-butylphenol), 2,2'-methylenebis(4-ethyl-6-tert-butylphenol), bis[3,3-bis(4-hydroxy-3-tert-butylphenyl)butylic acid] glycol ester, 4,4'-butylidenebis(6-tert-butyl-m-cresol), 2,2'-ethylidenebis(4,6-di-tert-butylphenol), 2,2'-ethylidenebis(4-sec-butyl-6-tert-butylphenol), 1,1,3-tris(2-methyl-4-hydroxy-5-tert-butylphenyl)butane, bis[2-tert-butyl-4-methyl-6-(2-hydroxy-3-tert-butyl-5-methylbenzyl)phenyl] telephthalate, 1,3,5-tris(2,6-dimethyl-3-hydroxy-4-tert-butylbenzyl) isocyanurate, 1,3,5-tris(3,5-di-tert-butyl-4-hydroxybenzyl) isocyanurate, 1,3,5-tris(3,5-di-tert-butyl-4-hydroxybenzyl)-2,4,6-trimethylbenzene, 1,3,5-tris[(3,5-di-tert-butyl-4-hydroxyphenyl)propionyloxyethyl] isocyanurate, tetrakis[methylene-3-(3,5-di-tert-butyl-4-hydroxyphenyl) propionate]methane, 2-tert-butyl-4-methyl-6-(2-acryloyloxy-3-tert-butyl-5-methylbenzyl)phenol, 3,9-bis[1,1-dimethyl-2-{(3-tert-butyl-4-hydroxy-5-methylphenyl)propionyloxy}ethyl]-2,4,8,10-tetraoxaspiro[5.5]undecane, and triethylene glycol bis[(3-tert-butyl-4-hydroxy-5-methylphenyl)propionate].

Examples of the above-mentioned sulfur antioxidants may include dialkylthio dipropionates such as dilauryl, dimyristyl and distearyl thiodipropionates, and β-alkylmercaptopropionic acid esters of polyols such as pentaerythritol tetra(β-dodecylmercaptopropionate).

Examples of the above-mentioned ultraviolet absorbers may include 2-hydroxybenzophenones such as 2,4-dihydroxybenzophenone, 2-hydroxy-4-methoxybenzophenone, 2-hydroxy-4-octoxybenzophenone and 5,5'-methylenebis(2-hydroxy-4-methoxybenzophenone); 2-(2'-hydroxyphenyl)benzotriazoles such as 2-(2'-hydroxy-5'-methylphenyl)benzotriazole, 2-(2'-hydroxy-3',5'-di-tert-butylphenyl)benzotriazole, 2-(2'-hydroxy-3',5'-di-tert-butylphenyl)-5-chlorobenzotriazole, 2-(2'-hydroxy-3'-tert-butyl-5'-methylphenyl)-5-chlorobenzotriazole, 2-(2'-hydroxy-5'-tert-octylphenyl)benzotriazole, 2-(2'-hydroxy-3',5'-dicumylphenyl)benzotriazole and 2,2'-methylenebis(4-tert-octyl-6-benzotriazolyl) phenol; benzoates such as phenyl salicylate, resorcinol monobenzoate, 2,4-di-tert-butylphenyl-3',5'-di-tert-butyl-4'-hydroxybenzoate and hexadecyl-3,5-di-tert-butyl-4-hydroxybenzoate; substituted oxanilides such as 2-ethyl-2'-ethoxyoxanilide and 2-ethoxy-4'-dodecyloxanilide; and cyanoacrylates such as ethyl-α-cyano-β,β-diphenylacrylate and methyl-2-cyano-3 -methyl-3-(p-methoxyphenyl) acrylate.

Examples of the above-mentioned hindered amine light stabilizers may include 2,2,6,6-tetramethyl-4-piperidyl stearate, 1,2,2,6,6-pentamethyl-4-piperidyl stearate, 2,2,6,6-tetramethyl-4-piperidyl benzoate, N-(2,2,6,6-tetramethyl-4-piperidyl)dodecylsuccinic acid imide, 1-[(3,5-di-tert-butyl-4-hydroxyphenyl)propionyloxyethyl]-2,2,6,6-tetramethyl-4-piperid yl-(3,5-di-tert-butyl-4-hydroxyphenyl) propionate, bis(2,2,6,6-tetramethyl-4-piperidyl) sebacate, bis(1,2,2,6,6-pentamethyl-4-piperidyl) sebacate, bis(1,2,2,6,6-pentamethyl-4-piperidyl)-2-butyl-2-(3,5-di-tert-butyl-4-hydroxybenzyl) malonate, N,N'-bis(2,2,6,6-tetramethyl-4-piperidyl)hexamethylenediamine, tetra(2,2,6,6-tetramethyl-4-piperidyl)butanetetracarboxylate, tetra(1 ,2,2,6,6-pentamethyl-4-piperidyl)butanetetracarboxylate, bis(2,2,6,6-tetramethyl-4-piperidyl)-di(tridecyl)butanetetracarboxylate, bis(1,2,2,6,6-pentamethyl-4-piperidyl)-di(tridecyl)butanetetracarboxylate, 3,9-bis[1,1-dimethyl-2-{tris(2,2,6,6-tetramethyl-4-piperidyloxycarbonyloxy)butylcarbo nyloxy}ethyl]-2,4,8,10-tetraoxaspiro[5.5]undecane, 3,9-bis[1,1-dimethyl-2-{tris(1,2,2,6,6-pentamethyl-4-piperidyloxycarbonyloxy)butylcar bonyloxy}ethyl]-2,4,8,10-tetraoxaspiro[5.5]undecane, 1,5,8,12-tetrakis[4,6-bis{N-(2,2,6,6-tetramethyl-4-piperidyl)butylamino}-1,3,5-triazin-2-yl]-1,5,8,12-tetraazadodecane, 1-(2-hydroxyethyl)-2,2,6,6-tetramethyl-4-piperidinol/dimethyl succinate condensate, 2-tert-octylamino-4,6-dichloro-s-triazine/N,N'-bis(2,2,6,6-tetramethyl-4-piperidyl)hexa methylenediamine condensate, N,N'-bis(2,2,6,6-tetramethyl-4-piperidyl)hexamethylenediamine/dibromoethane condensate and the like.

Examples of the above-mentioned filler may include calcium carbonate, silica, clay, glass beads, mica, sericite, glass flakes, asbestos, Wollastonite, potassium titanate, PMF, plaster fibers, xonotlite, MOS, phosphate fibers, glass fibers, carbonic acid fibres and aramide fibers.

Examples of the above-mentioned foaming agents may include decomposition-type organic foaming agents such as azodicarboxylic acid amide, azobisisobutyronitrile, p, p'-oxybisbenzenesulfonylhydrazide, n, n'-dinitrosopentamethylenetetramine, p-toluenesulfonyl semicarbazide and trihydrazotriazine, and decomposition-type inorganic foaming agents such as sodium bicarbonate, ammonium carbonate, ammonium bicarbonate, ammonium nitrite, azide compounds and sodium borohydride.

Examples of the above-mentioned flame retarders and flame retarder aids may include triazine ring-containing compounds, metal hydroxides, other inorganic phosphorus, halogen flame retarders, silicon flame retarders, phosphate ester flame retarders, condensed phosphate ester flame retarders, intumescent flame retarders, antimony oxides such as antimony trioxide, other inorganic flame retarder aids and organic flame retarder aids, and the like.

Examples of the above-mentioned triazine ring-containing compounds may include melamine, ammeline, benzoguanamine, acetoguanamine, phthalodiguanamine, melamine cyanurate, melamine pyrophosphate, butylenediguanamine, norbornenediguanamine, methylenediguanamine, ethylenedimelamine, trimethylenedimelamine, tetramethylenedimelamine, hexamethylenedimelamine, and 1,3-hexylenedimelamine.

Examples of the above-mentioned metal hydroxides may include magnesium hydroxide, aluminum hydroxide, calcium hydroxide, barium hydroxide, zinc hydroxide, and KISUMA 5A (magnesium hydroxide: manufactured by Kyowa Chemical Industry Co., Ltd.).

Examples of the above-mentioned phosphate ester flame retarders may include trimethyl phosphate, triethyl phosphate, tributyl phosphate, tributoxyethyl phosphate, trischloroethyl phosphate, trisdichloropropyl phosphate, triphenyl phosphate, tricresyl phosphate, cresyl diphenyl phosphate, trixylenyl phosphate, octyl diphenyl phosphate, xylenyl diphenyl phosphate, trisisopropyl phenyl phosphate, 2-ethylhexyl diphenyl phosphate, t-butyl phenyl diphenyl phosphate, bis-(t-butylphenyl) phenyl phosphate, tris-(t-butylphenyl) phosphate, isopropyl phenyl diphenyl phosphate, bis-(isopropylphenyl) diphenyl phsophate and tris-(isopropylphenyl) phosphate.

Examples of the above-mentioned condensed phosphate ester flame retarders may include 1,3-phenylene bis(diphenyl phosphate), 1,3-phenylene bis(dixylenyl phosphate) and bisphenol A bis(diphenyl phosphate) and examples of the intumescent flame retarders may include ammonium salts and amine salts of polyphosphoric acids.

Examples of the above-mentioned other inorganic flame retarder aids may include inorganic compounds such as titanium oxide, aluminum oxide, magnesium oxide and talc, and surface-treated products thereof, and for example, various commercially available products such as TIPAQUE R-680 (titanium oxide: manufactured by Ishihara Sangyo Kaisha, Ltd.) and KYOWAMAG 150 (magnesium oxide: manufactured by Kyowa Chemical Industry Co., Ltd.) can be used.

Furthermore, other stabilizers can be added to the vinyl chloride resin composition. Examples of such stabilzers may include diphenylthiourea, anilinodithiotriazine, melamine, benzoic acid, cinnamic acid, p-tert-butyl benzoate, zeolite and perchlorates.

Furthermore, where necessary, additives that are generally used in vinyl chloride resins such as crosslinking agents, antistatic agents, antifogging agents, agents for preventing plate-out, surface treating agents, fluorescent agents, antimold agents, bactericides, metal inactivators, mold releasing agents, processing aids, bluing agents, pigments and dyes can be incorporated in the vinyl chloride resin composition.

Furthermore, it is possible to use the vinyl chloride resin composition irrespective of the method for processing the vinyl chloride resin, and for example, the vinyl chloride resin composition can be preferably used in calendar process, roll process, extrusion molding process, melt rolling process, injection molding process, compression molding process, paste process, powder mold process and foam molding process.

The vinyl chloride resin composition is used in building materials and structural materials, and since molded articles having high thermal stability and suppressed coloring can be obtained, the vinyl chloride resin composition is specifically preferably used as a white building material for window frames.

### EXAMPLES

Hereinafter the present invention will further be described with referring to Examples and Comparative Examples, but the present invention is not limited by these.

### [Examples 1 to 4 and Comparative Examples 1 and 2]

The incorporation substances in the following Table 1 were blended in a rocking mixer, and roll-kneaded under conditions of 190°C × 30 rpm × 0.6 mm × 3 minutes to prepare sheets. For these sheets, the following evaluations were conducted. The results are shown in Table 1.

### Evaluation of plate-out:

The roll surface after the roll-kneading was observed by visual observation, and the plate-out was evaluated according to <Evaluation Criteria> mentioned below.

### <Evaluation Criteria>

○: An adhered substance was not observed.
Δ: An adhered substance was slightly observed.
× : An adhered substance was significantly observed.

### Evaluation of thermal stability:

The obtained sheet was put into a gear oven at 190°C, and the blackening time (minutes) was measured to thereby evaluate the thermal stability.

### Evaluation of coloring resistance:

The obtained sheets each having a thickness of 0.6 mm were attached to each other, and the sheets were press-processed at 190°C for 5 minutes to thereby prepare a sheet having a thickness of 1mm. The coloring resistance was evaluated for the obtained sheet by measuring the yellowness index (Y I.).

**[Table 1]**

| | | Examples | | | | Comparative Examples | |
|---|---|---|---|---|---|---|---|
| | | 1 | 2 | 3 | 4 | 1 | 2 |
| Vinyl chloride resin*¹ | | 100 | 100 | 100 | 100 | 100 | 100 |
| Calcium carbonate | | 5.0 | 5.0 | 5.0 | 5.0 | 5.0 | 5.0 |
| Acrylic processing aid*² | | 1.5 | 1.5 | 1.5 | 1.5 | 1.5 | 1.5 |
| Ester lubricant*³ | | 0.1 | 0.1 | 0.1 | 0.1 | 0.1 | 0.1 |
| Ester lubricant*⁴ | | 0.1 | 0.1 | 0.1 | 0.1 | 0.1 | 0.1 |
| Stearoylbenzoylmethane | | 0.05 | 0.05 | 0.05 | 0.05 | 0.05 | 0.05 |
| Phenolic antioxidant*⁵ | | 0.1 | 0.1 | 0.1 | 0.1 | 0.1 | 0.1 |
| Component (a) | Calcium stearate | 0.7 | 0.7 | 0.7 | 0.7 | 0.7 | 0.7 |
| | Zinc stearate | 0.6 | 0.6 | 0.6 | 0.6 | 0.6 | 0.6 |
| Component (b) | Zinc acetylacetonate | 0.2 | 0.2 | | 0.2 | 0.2 | 0.2 |
| | Calcium acetylacetonate | | | 0.2 | | | |
| Component (c) | Zinc-modified hydrotalcite*⁶ | 0.9 | 0.9 | 0.9 | | 0.9 | 0.9 |
| | Hydrotalcite*⁷ | | | | 0.9 | | |
| Component (d) | Polyol mixture*⁸ | 0.1 | 0.3 | 0.1 | 0.1 | | |
| Component (e) | Titanium dioxide*⁹ | 1.0 | 1.0 | 1.0 | 1.0 | 1.0 | 1.0 |
| Dipentaerythritol | | | | | | 0.1 | 0.3 |
| Thermal stability (Blackening time: min) | 190°C | 60 | 90 | 105 | 75 | 60 | 90 |
| | 200°C | 45 | 45 | 60 | 45 | 45 | 60 |
| Coloring resistance (YI.) | | 29.3 | 36.2 | 23.9 | 34.9 | 41.2 | 49.6 |
| Plate-out | | ○ | ○ | ○ | ○ | Δ | Δ |
| (The incorporations are on the basis of parts by mass) *1: ZEST1000Z (manufactured by Shin Dai-Ichi Vinyl Corporation) | | | | | | | |
| *2: An acrylic polymer processing aid (manufactured by Mitsubishi Rayon Co., Ltd.; P-551A) | | | | | | | |
| *3: An ester lubricant (manufactured by Riken Vitamin; RIKESTAR SL-02) | | | | | | | |
| *4: An ester lubricant (manufactured by Cognis Oleochemicals Japan; LOXIOL G60) | | | | | | | |
| *5: Tetrakis[3-(3,5-di-tert-butyl-4-hydroxyphenyl)propionyloxymethyl]methane (manufactured by ADEKA Corporation, ADEKA STAB AO-60) | | | | | | | |
| *6: A zinc-modified hydrotalcite (composition formula: Mg_{3.0}ZnAl₂(OH)₁₂(CO₃)·3H₂O) (manufactured by Kyowa Chemical Industry Co., Ltd.; ALCAMIZER P-93) | | | | | | | |
| *7: Hydrotalcite (composition formula: Mg_{4.2}Al₂(OH)₁₃(CO₃).3H₂O) (manufactured by Kyowa Chemical Industry Co., Ltd.; MAGCELAR 1) | | | | | | | |
| *8: A polyol mixture wherein when the condensation degree of each pentaerythritol is represented by n, n=1 is 4.4% by mass, n=2 is 5.1% by mass, n=3 is 2.6 % by mass and n≥4 is 87.9% by mass. | | | | | | | |
| *9: Titanium dioxide (manufactured by Ishihara Sangyo Kaisha Ltd.; TIPAQUE CR-90) | | | | | | | |

As is apparent from the above-mentioned results, in the case when dipentaerythritol was used alone as the pentaerythritols or condensates thereof (Comparative Example 1), the coloring resistance and processability (plate-out) were poor, and these were not improved even in the case when the incorporation amount of the dipentaerythritol was increased (Comparative Example 2).

On the other hand, in the cases when a polyol mixture, which is the component (d), was used as the pentaerythritols or condensates thereof (Examples 1 to 4), vinyl chloride resin compositions having excellent thermal stability, coloring resistance and processability were able to be obtained.

## Claims

1. A white building material comprising a vinyl chloride resin and:
(a) 0.5 to 3 parts by mass of an organic acid calcium salt and/or an organic acid zinc salt,
(b) 0.1 to 1 parts by mass of calcium acetylacetonate and/or zinc acetylacetonate,
(c) 0.1 to 3 parts by mass of a zinc-modified hydrotalcite compound represented by the following formula (1):
[Chemical Formula 1]
Mgₓ₁Znₓ₂Al₂(OH)₂₍ₓ₁₊ₓ₂₎₊₄·CO₃·mH₂O (1)
wherein x1 and x2 each represents a number that satisfies the conditions represented by the following formulas, and m represents a real number, 0<x2/x1<10, 2≤x1+x2<20,
(d) 0.1 to 3 parts by mass of a polyol mixture, and
(e) 0.5 to 6 parts by mass of titanium dioxide, with respect to 100 parts by mass of the vinyl chloride resin,
wherein the polyol mixture of the above-mentioned component (d) is a polyol mixture composed of pentaerythritols and condensates thereof, and when the condensation degree of each pentaerythritol is represented by n, the total content of the pentaerythritols wherein n=1 to 3 is 5 to 40 mass% with respect to the total amount of the polyol mixture, provided that the total content of the pentaerythritols wherein n=1 to 3 and the condensates of the pentaerythritols wherein n≥4 is 100 mass%.

2. The white building material according to claim 1, wherein the polyol mixture (d) is a polyol mixture composed of pentaerythritols and condensates thereof, and when the condensation degree of each pentaerythritol is represented by n, the content of the pentaerythritol wherein n=1 is 0 to 10 mass%, and the total content of the pentaerythritols wherein n=1 to 3 is 5 to 30 mass%, with respect to the total amount of the polyol mixture.

## Patentansprüche

1. Weißes Baumaterial umfassend ein Vinylchloridharz und:
(a) 0,5 bis 3 Gewichtsteile eines Calciumsalzes einer organischen Säure und/oder eines Zinksalzes einer organischen Säure,
(b) 0,1 bis 1 Gewichtsteile Calciumacetylacetonat und/oder Zinkacetylacetonat,
(c) 0,1 bis 3 Gewichtsteile einer Zink-modifizierten Hydrotalcitverbindung, dargestellt durch die folgende Formel (1) :
[Chemische Formel 1] Mgₓ₁Znₓ₂Al₂(OH)₂₍ₓ₁₊ₓ₂₎₊₄▪CO₃▪mH₂O
worin x1 und x2 jeweils eine Zahl darstellen, die den Bedingungen genügt, die durch die folgenden Formeln dargestellt werden, und m eine reelle Zahl darstellt, 0 < x2/x1 <10, 2 ≤ x1 + x2 <20,
(d) 0,1 bis 3 Gewichtsteile einer Polyolmischung, und
(e) 0,5 bis 6 Gewichtsteile Titandioxid, bezogen auf 100 Gewichtsteile des Vinylchloridharzes,
wobei die Polyolmischung der oben genannten Komponente (d) eine Polyolmischung ist, die aus Pentaerythritolen und Kondensaten davon zusammengesetzt ist, und wenn der Kondensationsgrad jedes Pentaerythritols durch n dargestellt wird, der Gesamtgehalt der Pentaerythritole, bei denen n = 1 bis 3 ist, 5 bis 40 Gewichts-% bezogen auf die Gesamtmenge der Polyolmischung beträgt, vorausgesetzt, dass der Gesamtgehalt der Pentaerythritole, bei denen n = 1 bis 3 ist, und der Kondensate der Pentaerythritole, bei denen n ≥ 4 ist, 100 Gewichts-% beträgt.

2. Weißes Baumaterial nach Anspruch 1, wobei die Polyolmischung (d) eine Polyolmischung ist, die aus Pentaerythritolen und Kondensaten davon zusammengesetzt ist, und wenn der Kondensationsgrad jedes Pentaerythritols durch n dargestellt wird, der Gehalt des Pentaerythritols, bei dem n = 1 ist, 0 bis 10 Gewichts-% beträgt, und der Gesamtgehalt der Pentaerythritole, bei denen n = 1 bis 3 ist, 5 bis 30 Gewichts-% beträgt, bezogen auf die Gesamtmenge der Polyolmischung.

## Revendications

1. Matériau de construction blanc comprenant une résine de chlorure de vinyle et:
(a) 0,5 à 3 parties en masse d'un sel de calcium d'un acide organique et/ou d'un sel de zinc d'un acide organique,
(b) 0,1 à 1 partie en masse d'acétylacétonate de calcium et/ou d'acétylacétonate de zinc,
(c) 0,1 à 3 parties en masse d'un composé de type hydrotalcite modifié par du zinc, représenté par la formule (1) suivante:
[Formule chimique 1] Mgₓ₁Znₓ₂Al₂(OH)₂₍ₓ₁₊ₓ₂₎₊₄▪CO₃▪mH₂O
où x1 et x2 représentent chacun un nombre qui satisfait aux conditions représenté par les formules suivantes, et m représente un nombre réel, 0 < x2/x1 <10, 2 ≤ x1 + x2 <20,
(d) 0,1 à 3 parties en masse d'un mélange de polyols, et
(e) 0,5 à 6 parties en masse de dioxyde de titane,
pour 100 parties en masse de la résine de chlorure de vinyle,
dans lequel le mélange de polyols du composant (d) susmentionné est un mélange de polyols composé de pentaérythritols et de condensats de ceux-ci, et quand le degré de condensation de chaque pentaérythritol est représenté par n, la teneur totale en les pentaérythritols pour lesquels n = 1 à 3 est de 5 à 40 % en masse, par rapport à la quantité totale du mélange de polyols, sous réserve que la teneur totale en les pentaérythritols pour lesquels n = 1 à 3 et en les condensats des pentaérythritols pour lesquels n ≥ 4 soit de 100 % en masse.

2. Matériau de construction blanc selon la revendication 1, dans lequel le mélange de polyols (d) est un mélange de polyols composé de pentaérythritols et de condensats de ceux-ci, et quand le degré de condensation de chaque pentaérythritol est représenté par n, la teneur en le pentaérythritol pour lequel n = 1 est de 0 à 10 % en masse, et la teneur totale en les pentaérythritols pour lesquels n = 1 à 3 est de 5 à 30 % en masse, par rapport à la quantité totale du mélange de polyols.
